# EUROPEAN PATENT SPECIFICATION

(11) **EP 3 961 442 B1**
(45) Date of publication and mention of the grant of the patent: **29.05.2024**
(21) Application number: 21182287.9
(22) Date of filing: 29.06.2021
(51) Int. Cl.: G06F 21/33, G06Q 20/38, H04L 9/32, H04L 9/00, G06Q 20/40, H04L 9/40, G06Q 20/10

(54) **DIGITAL CERTIFICATE INVALIDATION AND VERIFICATION METHOD AND DEVICE**
VERFAHREN UND VORRICHTUNG ZUR UNGÜLTIGMACHUNG UND VERIFIZIERUNG DIGITALER ZERTIFIKATE
DISPOSITIF ET PROCEDE D'INVALIDATION ET DE VERIFICATION D'UN CERTIFICAT NUMERIQUE

(30) Priority: 28.08.2020 CN 202010889844
(43) Date of publication of application: 02.03.2022
(73) Proprietor: Alipay (Hangzhou) Information Technology Co., Ltd., Hangzhou, Zhejiang 310000 (CN)
(72) Inventor: LIU, Xiaojian, Hangzhou, 310000 (CN)
(74) Representative: Goddar, Heinz J.

(56) References cited:
- US-A1- 2019 363 896
- US-A1- 2020 127 855

## Description

### TECHNICAL FIELD

This specification relates to the field of computer technology, and in particular, to methods and devices for invalidating and verifying digital certificates.

### BACKGROUND

A digital certificate, also known as digital credential or verifiable certificate, is an authoritative and credible electronic document issued by an authentication center, and is used to show the identity of a communication party in digital communications to ensure the communication security. Generally speaking, an authentication center generates a digital certificate through a digital encryption technology. Here, a digital signature or signature verification is adopted to ensure that the digital certificate is not tampered with during transmission, thereby guaranteeing the security when the digital certificate is used. For example, a bank may issue a digital certificate for an authenticated account through the authentication center. When the account is used for funds operations through online banking, the digital certificate needs to be provided to show the authorized identity of the account, which in turn ensures the funds security.

In some cases, the authentication center needs to revoke or terminate the issued digital certificate, causing the digital certificate to be invalid. For example, if the authentication center discovers that an issued digital certificate is incorrect, a user corresponding to the digital certificate closes the account, or that an account is found to use a digital certificate for operations at a high risk for fraud, and the like, then the authentication center may need to invalidate the corresponding digital certificate, which may be referred to as termination or revocation of the certificate. Accordingly, for the verification of an account certificate, the certificate needs to be verified first to check whether the certificate has been revoked.

Therefore, a method for efficiently, accurately, and securely revoking digital certificates, and accordingly verifying the validity of digital certificates is desired.
US 2020/127855 A1 discloses techniques for providing a digital certificate management for blockchain technologies. A transaction request including a digital certificate is received from a certificate authority at a node in a blockchain network, and the transaction request is a request to write the digital certificate into a blockchain associated with the blockchain network, and the digital certificate is issued to a node in the blockchain network. A consensus verification result is determined for the transaction request, and the consensus verification result is produced by nodes in the blockchain network. The consensus verification result is compared to a predetermined threshold value. In response to determining the consensus verification result is greater than or equal to the predetermined threshold value, the digital certificate is stored in the blockchain associated with the blockchain network.
US 2019/363896 A1 discloses a system and a method for creating, sharing and revoking digital certificates in a decentralized and distributed manner, without a need for a central Certificate Authority is presented. A blockchain is initiated, with a root certificate published in one of an initial blocks of the blockchain. The root certificate may subsequently issue further certificates to other participants on the blockchain, or participants may submit certificates to the blockchain for signing by the root certificate. Notification of a revocation of certificates may be performed through the blockchain. The blockchain provides a final single view of a true state of the digital certificates in the system and their respective authority and validity. The issuing of further certificates, signing of certificates and revocation of certificates may be associated with a transfer of digital credits of commercial value.

### SUMMARY

The present invention is defined by the appended set of claims. Preferred embodiments are defined by the dependent claims. One or more embodiments of this specification describe methods and corresponding devices for invalidating and verifying a digital certificate with the aid of a blockchain. By using the methods and devices, this specification may save the storage space of the blockchain and improve the verification efficiency.

According to a first aspect, a method for invalidating a digital certificate is provided, comprising: determining whether a first digital certificate is a to-be-invalidated digital certificate; if so, obtaining a first certificate identification of the first digital certificate; and sending to a first node in a blockchain network a recording request, wherein the recording request comprises the first certificate identification, causing the first node to record the first certificate identification in the blockchain.

In one embodiment, the determining whether a first digital certificate is a to-be-invalidated digital certificate comprises: determining whether the first digital certificate is a digital certificate that needs to be terminated.

Further, in one example, if the first digital certificate is a digital certificate that needs to be terminated, a validity period of the first digital certificate is obtained; whether current time is within the validity period is determined; and when the current time is within the validity period, the first digital certificate is determined as a to-be-invalidated digital certificate.

According to an implementation manner, the obtaining a first certificate identification of the first digital certificate comprises: obtaining first certificate content of the first digital certificate; and hashing the first certificate content to obtain a first certificate hash as the first certificate identification.

According to another implementation manner, the obtaining a first certificate identification of the first digital certificate comprises: obtaining a unique certificate number of the first digital certificate as the first certificate identification.

According to a second aspect, a method for verifying validity of a digital certificate is provided, comprising: obtaining a second certificate identification of a to-be-verified second digital certificate; sending to a second node in a blockchain network a search request, wherein the search request comprises the second certificate identification, causing the second node to search whether the second certificate identification is recorded in the blockchain; receiving a search result returned by the second node; and determining that the second digital certificate is an invalid certificate if the search result shows that the second certificate identification is recorded in the blockchain.

In one embodiment, before the sending to a second node in a blockchain network a search request, the method further comprises: verifying whether a signature of the second digital certificate is correct; and if the signature is not correct, determining that the second digital certificate is an invalid certificate.

Further, in one example, before the sending to a second node in a blockchain network a search request, the method further comprises: obtaining a validity period of the second digital certificate; and determining that the second digital certificate is an invalid certificate if current time is beyond the validity period.

According to an implementation manner, the obtaining a second certificate identification of the to-be-verified second digital certificate comprises: obtaining second certificate content of the second digital certificate; and hashing the second certificate content to obtain a second certificate hash as the second certificate identification.

According to another implementation manner, the obtaining a second certificate identification of the second digital certificate comprises: obtaining a unique certificate number of the second digital certificate as the second certificate identification.

According to a third aspect, a device for invalidating a digital certificate is provided, comprising: a determining unit, configured to determine whether a first digital certificate is a to-be-invalidated digital certificate; an obtaining unit, configured to obtain a first certificate identification of the first digital certificate if the first digital certificate is a to-be-invalidated digital certificate; and a request unit, configured to send to a first node in a blockchain network a recording request, wherein the recording request comprises the first certificate identification, causing the first node to record the first certificate identification in the blockchain.

According to a fourth aspect, a device for verifying validity of a digital certificate is provided, comprising: an obtaining unit, configured to obtain a second certificate identification of a to-be-verified second digital certificate; a searching unit, configured to send to a second node in a blockchain network a search request, wherein the search request comprises the second certificate identification, causing the second node to search whether the second certificate identification is recorded in the blockchain; a receiving unit, configured to receive a search result returned by the second node; and a confirming unit, configured to determine that the second digital certificate is an invalid certificate if the search result shows that the second certificate identification is recorded in the blockchain.

According to a fifth aspect, a computer-readable storage medium having a computer program stored thereon is provided, wherein when the computer program is executed in a computer, the computer is caused to execute the method according to the first aspect or the second aspect.

According to a sixth aspect, a computing device is provided, comprising a memory and a processor, wherein executable codes are stored in the memory; and when the processor executes the executable codes, the method according to the first aspect or the second aspect is implemented.

According to the methods and devices provided by the embodiments of this specification, only the certificate identifications of the digital certificates that need to be revoked are uploaded to the blockchain. Since the digital certificates that need to be revoked account for only a small proportion of all the certificates, the occupied storage space in the blockchain network is greatly reduced, thereby saving the storage resources and reducing the storage pressure. When a digital certificate having an unknown state is to be verified, searching for whether the identification of the digital certificate is stored in the blockchain may be performed through any node in the blockchain network. Since searching for whether a piece of data is stored in the blockchain does not require a real storage access to the blockchain, a very fast search speed is achieved, thereby providing fast verification regarding the validity of the digital certificate.

### BRIEF DESCRIPTION OF THE DRAWINGS

In order to more clearly describe the technical solutions of the embodiments of the present invention, the accompanying drawings used for the description of the embodiments are briefly described below. Apparently, the accompanying drawings described below are merely some embodiments of the present invention. One of ordinary skill in the art may obtain other drawings according to these accompanying drawings without creative efforts.
FIG. 1 is a schematic diagram of an implementation scenario according to an embodiment of this specification;
FIG. 2 is a process flow diagram of issuing a digital certificate according to an embodiment;
FIG. 3 is a process flow diagram of revoking a digital certificate according to an embodiment;
FIG. 4 is a process flow diagram of verifying validity of a digital certificate according to an embodiment;
FIG. 5 is a schematic block diagram of a device for invalidating a digital certificate according to an embodiment; and
FIG. 6 is a schematic block diagram of a device for verifying validity of a digital certificate according to an embodiment.

### DETAILED DESCRIPTION

The solutions provided by this specification are described below with reference to the accompanying drawings.

As mentioned above, in some cases, the issued digital certificate needs to be invalidated, namely to be revoked or terminated. Accordingly, in the subsequent step where a digital certificate is to be verified, the certificate also needs to be verified first to check whether the certificate has been revoked.

To this end, in a solution, the state information of the digital certificate, i.e., whether revoked or not, is stored in a blockchain to achieve validity verification of a digital certificate. When the validity of a digital certificate needs to be verified, the state information of the digital certificate is read from the blockchain and used to determine whether the digital certificate has been revoked.

In order to enhance the efficiency of revoking and verifying the digital certificate, reduce the storage pressure on the blockchain, and increase the search throughput, the embodiments of this specification provide an improved idea. According to this idea, only the certificate identifications of the digital certificates that need to be revoked are uploaded to the blockchain. When validity of a digital certificate is to be verified, whether the digital certificate has been revoked may be determined by merely searching a node in the blockchain to check whether a target certificate identification is stored in the blockchain.

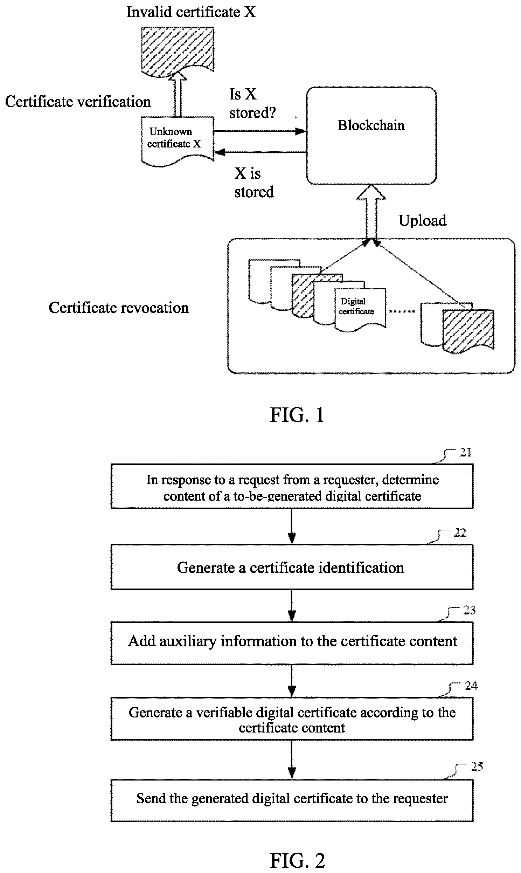

FIG. 1 is a schematic diagram of an implementation scenario according to an embodiment of this specification. As shown in FIG. 1, among the numerous digital certificates issued by an authentication center, only certificate identifications of digital certificates that need to be revoked, namely the identifications of the shadowed certificates shown in FIG. 1, are uploaded to the blockchain. Since the digital certificates that need to be revoked account for only a small proportion of all certificates, the occupied storage space in the blockchain network is greatly reduced, thereby saving the storage resources and reducing the storage pressure.

When a digital certificate X having an unknown state is to be verified, searching for whether the identification of the digital certificate X is stored in the blockchain may be performed through any node in the blockchain network. When the content of a piece of data stored in the blockchain is to be searched, the content stored in each block needs to be looked up, which means that a storage access to the blockchain is performed. However, according to the current mainstream blockchain storage technology, if searching is only to check whether a piece of data is stored in the blockchain, the storage records of each block in the blockchain do not need to be looked up, which means that a storage access to the blockchain does not need to be actually performed. A fast search speed is thus achieved. As a result, the node in the blockchain may provide fast feedback on whether the identification of the digital certificate X is stored in the blockchain. If the feedback indicates that the certificate identification of the digital certificate X is already stored in the blockchain, the digital certificate X is deemed terminated and invalid. In this way, the validity of the digital certificate may be verified quickly.

Implementation manners of issuing, revoking, and verifying a digital certificate at each stage are described below.

FIG. 2 is a process flow diagram of issuing a digital certificate according to an embodiment. The steps of this process flow are executed by a processing device of a certificate authority, such as an authentication center.

As shown in FIG. 2, first, in Step 21, in response to a request from a requester, content of a to-be-generated digital certificate is determined. In different scenarios, the above-described requester may be an institution such as a bank, or a user such as a subscriber. In various embodiments, the certificate content may include one or more of the following items: information of the certificate authority, information of the certificate requester, information of the certificate user, description of the certificate verification content, etc.

In Step 22, a certificate identification is generated. In one embodiment, a serial number generated sequentially may be assigned to the digital certificate as its certificate identification. In another embodiment, hashing may be also performed based on the above-described certificate content, and the obtained hash value is used as the certificate identification. The certificate identification may also be generated in other ways, as long as it can be ensured that the certificate identification may uniquely identify the digital certificate.

In Step 23, auxiliary information is added to the certificate content. For example, the certificate identification may be used as auxiliary information and added to the certificate content. In most cases, a validity period or expiration time is further assigned to the digital certificate. In some embodiments, the validity period of the certificate can be preset, for example, as 3 years. The time that the certificate becomes invalid is determined according to current time and the validity period. In a case like this, the information of the validity period or of the time the certificate becomes invalid may also be added to the certificate content as auxiliary information.

Therefore, in Step 24, a verifiable digital certificate is generated according to the above-described certificate content. In one embodiment, a digital signature is generated based on the certificate content added with the auxiliary information, and the digital signature is attached to the certificate content to obtain a verifiable digital certificate. In general, the generation of the digital signature depends on asymmetric encryption. The certificate authority may generate an asymmetric public key-private key pair, with the private key held by the certificate authority, and the public key released to the public. In the process of generating the digital signature, a certificate summary is first generated based on the certificate content (in some embodiments, hashing is used); and then the certificate summary is encrypted with the private key to obtain the digital signature. The digital certificate is obtained by attaching the digital signature to the certificate.

Next, in Step 25, the generated digital certificate is sent to the requester. In this way, the issuance of a credible digital certificate is completed.

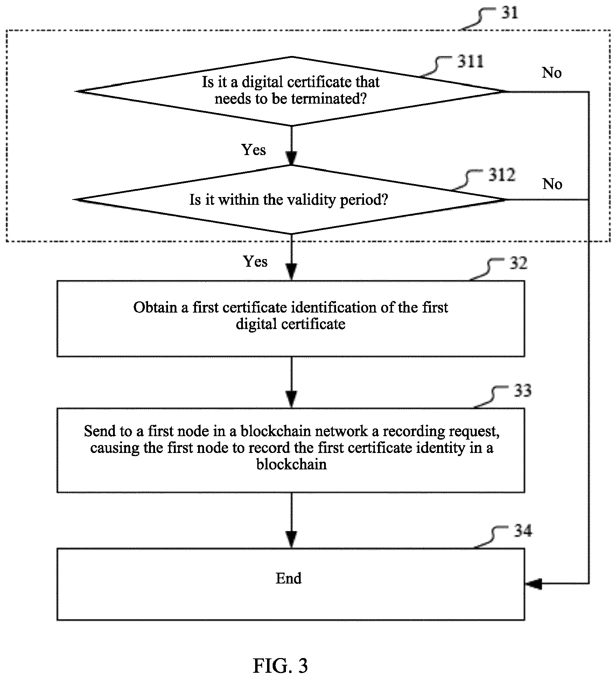

A process of revoking a digital certificate is described below. FIG. 3 is a process flow diagram of revoking a digital certificate according to an embodiment. This process flow may be executed by the certificate authority or management authority of the digital certificate.

As shown in FIG. 3, first, in Step 31, whether a current digital certificate is a to-be-invalidated digital certificate can be determined. For a concise description, the current digital certificate is referred to as a first digital certificate.

For example, in one embodiment, Step 31 includes Sub-step 311. Here, whether the current first digital certificate is a digital certificate that needs to be terminated is determined. For example, the digital certificate that needs to be terminated may be an incorrectly issued digital certificate, a digital certificate with which the associated account has been closed by the user, a digital certificate used by an account deemed to have a high risk for fraud, etc.

In one example, if the first digital certificate is a digital certificate that needs to be terminated, it is determined as a to-be-invalidated digital certificate. The process flow proceeds to Step 32. If the first digital certificate is not a digital certificate that needs to be terminated, then the process flow is redirected to Step 34 and the process ends.

In another example, if the first digital certificate is a digital certificate that needs to be terminated, the process flow further proceeds to Sub-step 312 to determine whether the digital certificate is expired. For example, in Sub-step 312, the validity period of the first digital certificate is obtained; and then whether current time is within the validity period is determined. If the current time is within the validity period, the first digital certificate is determined as a to-be-invalidated digital certificate, and the process flow proceeds to Step 32. If the current time is beyond the validity period, it means that the first digital certificate is invalid as the validity period has ended. Subsequent invalidation processing is not needed. Therefore, the process flow is redirected to Step 34 and the process ends.

As described above, only when the first digital certificate is determined as a to-be-invalidated digital certificate will the process flow proceed to Step 32. Here, a first certificate identification of the first digital certificate is obtained.

In one embodiment, first certificate content of the first digital certificate may be obtained and hashed, and the obtained first certificate hash is used as the first certificate identification. In another embodiment, a unique certificate number pre-assigned to the first digital certificate may be read and used as the first certificate identification. Here, the unique certificate number may be, in some embodiments, a serial number of the digital certificate generated by the certificate authority.

Next, in Step 33, a recording request is sent to any first node in the blockchain network, wherein the recording request comprises the above-described first certificate identification, causing the first node to record the first certificate identification in the blockchain. For example, the recording request may be converted into a blockchain-transaction format and transmitted to the first node. The first node may record this transaction on the blockchain using an existing method, thereby recording the first certificate identification therein on the blockchain. For example, the first node may broadcast, in the blockchain network, the transaction including the first certificate identification, and through the consensus mechanism, the transaction will eventually be recorded in a block of a chain of the blockchain.

It can be seen from the above-described process that through the determination at Step 31, only the digital certificates that need to be pre-terminated or pre-revoked are uploaded to the blockchain, and only the certificate identifications of the digital certificates need to be uploaded during the uploading. Since the digital certificates that need to be pre-terminated or pre-revoked only account for a very small proportion of the issued digital certificates, and the amount of data occupied by the certificate identifications is small, the total amount of the data that needs to be uploaded to the blockchain is greatly reduced, thereby significantly reducing the occupied storage space on the blockchain and greatly saving the storage resources.

When a certificate hash is used as a certificate identification, the probability of hash collision caused by the adopted hash algorithm must be so low that it can be ignored, thus avoiding confusion caused by the hash collision. In one embodiment, for a digital certificate that needs to be pre-terminated, its certificate hash (as a certificate identification) and certificate content may be uploaded for further determination when a hash collision occurs.

On this basis, the execution speed of a verification process flow corresponding to the above-described invalidation process flow is also greatly enhanced.

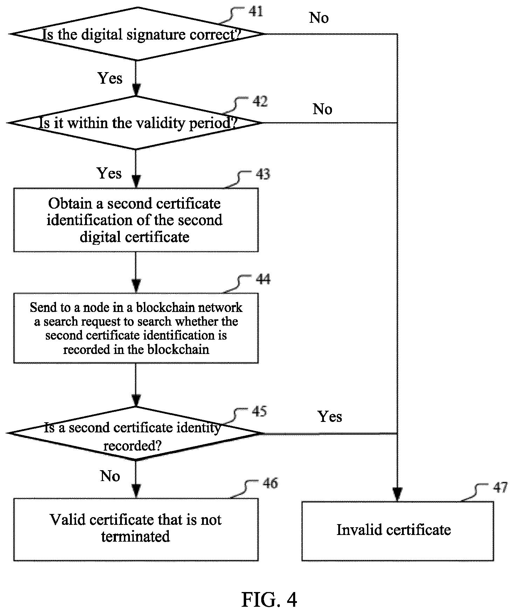

FIG. 4 is a process flow diagram of verifying validity of a digital certificate according to an embodiment. This process flow may be executed by any computing platform that needs to verify digital certificates. Such a platform is referred to as a verification platform hereinafter. In some embodiments, when a user uses a digital certificate to perform electronic transaction operations such as transfer via an electronic transaction platform, the electronic transaction platform may serve as a verification platform to first verify the validity of the digital certificate of the user. As shown in FIG. 4, the process of validity verification is described below.

According to an implementation manner, the verification platform first performs general verification on the to-be-verified digital certificate, which is referred to as a second digital certificate for simplicity.

In one example, the general verification includes Step 41, which is verifying whether a digital signature of the second digital certificate is correct; and if the digital signature of the second digital certificate is not correct, the second digital certificate is immediately determined as an invalid certificate. The digital signature is generated by encrypting the summary information of the certificate content through the private key held by the certificate authority. Therefore, the verification platform may use the public key issued to the public by the certificate authority to verify the digital signature. If the verification succeeds, further verification is subsequently performed; and if the signature verification fails, the process flow is directly redirected to Step 47 to determine that the second digital certificate is an invalid certificate.

In one example, the general verification of the digital certificate may also include the validity period verification of Step 42. For example, in Step 42, a validity period of the second digital certificate is obtained; and whether current time is beyond the validity period is determined. If the current time is still within the validity period, further verification is subsequently performed. If the current time is beyond the validity period, the process flow is redirected to Step 47 to immediately determine that the second digital certificate is an invalid certificate.

It needs to be appreciated that the above-described Step 41 and Step 42 may be executed in any relative order, which is not limited herein.

In addition to performing general verification, whether the second digital certificate has been revoked or terminated can also be verified. To this end, in Step 43, a second certificate identification of the second digital certificate is obtained. In one embodiment, second certificate content of the second digital certificate may be obtained; and then, the second certificate content is hashed to obtain a second certificate hash as the second certificate identification. In another embodiment, a unique certificate number of the second digital certificate may be read and used as the second certificate identification. Here, the unique certificate number may be, in some embodiments, a serial number of the digital certificate generated by the certificate authority.

Next, in Step 44, a search request is sent to any second node in the blockchain network, wherein the search request comprises a second certificate identification, causing the second node to search whether the second certificate identification is recorded in the blockchain.

It needs to be understood that the above-described second node may be any one node in the blockchain network, and may be the same as or different from the first node recording the invalid certificate identification in Step 33 of FIG. 3. Moreover, according to the current mainstream blockchain storage technology, searching whether a piece of data is stored in the blockchain may be achieved without the need of searching for the data records in each block of the blockchain. Therefore, the second node may search whether the second certificate identification is stored in the blockchain without the need of performing a real storage access to the blockchain.

For example, in one embodiment, each node in the blockchain network records the storage states of the data in the blockchain through the bloomfilter mechanism. Bloomfilter has a binary vector data structure and can be used to detect whether a data element is a member of a set. In the blockchain, each node uses a binary vector structure, namely a bitmap, to record the storage of data in the blockchain. When the node stores a piece of data D in the blockchain, the data D is mapped to a position in the bitmap through a mapping function, such as a hash function, and a bit value of the position is written as 1. When data search is required, the to-be-searched data is also mapped to a corresponding position through the mapping function. Whether this piece of data is stored in the blockchain is determined through the determination of whether a bit value of the corresponding position is 1. If the bit value is not 1, this piece of data is not stored in the blockchain. As a small probability of hash collision may exist, if the bit value is 1, the node determines whether this piece of data is really stored in the blockchain through further algorithms.

Through the above-described mechanism, the second node can quickly determine whether the second certificate identification of the second digital certificate is recorded in the blockchain without the need of traversing each block to search for the data content or perform a real storage access to the blockchain.

Therefore, in Step 45, the verification platform determines the validity of the second digital certificate according to a search result returned by the second node. If the search result shows that the second certificate identification is recorded in the blockchain, then in Step 47, the second digital certificate is determined as an invalid certificate; and if the search result shows that the second certificate identification is not recorded in the blockchain, then in Step 46, the second digital certificate is determined as not terminated.

Through the above-described process, when verifying whether the digital certificate is revoked or terminated, it only needs to search whether the certificate identification of the digital certificate is recorded in the blockchain. Compared with fetching the content of a piece of data from the blockchain, searching whether a piece of data is stored does not require a real storage access to the blockchain. Therefore, a fast search speed is achieved, and the verification efficiency is greatly enhanced.

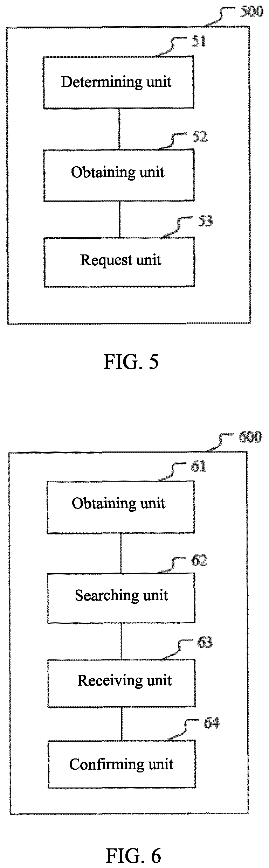

According to another embodiment, a device for invalidating a digital certificate is provided. The device may be deployed in a digital certificate authority, and the certificate authority may be implemented through any device, platform, or device cluster having computing and processing capabilities. FIG. 5 is a schematic block diagram of a device for invalidating a digital certificate according to an embodiment. As shown in FIG. 5, the invalidation device 500 comprises:
a determining unit 51, configured to determine whether a first digital certificate is a to-be-invalidated digital certificate;
an obtaining unit 52, configured to obtain a first certificate identification of the first digital certificate if the first digital certificate is a to-be-invalidated digital certificate; and
a request unit 53, configured to send to a first node in a blockchain network a recording request, wherein the recording request comprises the first certificate identification, causing the first node to record the first certificate identification in the blockchain.

According to one embodiment, the determining unit 51 is configured to: determine whether the first digital certificate is a digital certificate that needs to be terminated.

Further, in one embodiment, the determining unit 51 is further configured to: obtain a validity period of the first digital certificate if the first digital certificate is a digital certificate that needs to be terminated; determine whether current time is within the validity period; and determine that the first digital certificate is a to-be-invalidated digital certificate if the current time is within the validity period.

According to an implementation manner, the obtaining unit 52 is configured to: obtain first certificate content of the first digital certificate; and hash the first certificate content to obtain a first certificate hash as the first certificate identification.

According to another implementation manner, the obtaining unit 52 is configured to: obtain a unique certificate number of the first digital certificate as the first certificate identification.

Through the above-described device 500, the digital certificate can be revoked or terminated through the blockchain, thereby reducing the occupied storage space in the blockchain and saving the storage resources.

According to another embodiment, a device for verifying validity of a digital certificate is provided. The device can be deployed in a verification center, and the verification center may be implemented through any device, platform, or device cluster having computing and processing capabilities. FIG. 6 is a schematic block diagram of a device for verifying validity of a digital certificate according to an embodiment. As shown in FIG. 6, the verification device 600 comprises:
an obtaining unit 61, configured to obtain a second certificate identification of a to-be-verified second digital certificate;
a searching unit 62, configured to send to a second node in a blockchain network a search request, wherein the search request comprises the second certificate identification, causing the second node to search whether the second certificate identification is recorded in the blockchain;
a receiving unit 63, configured to receive a search result returned by the second node; and
a confirming unit 64, configured to determine that the second digital certificate is an invalid certificate if the search result shows that the second certificate identification is recorded in the blockchain.

In one embodiment, the above-described device also comprises a first verification unit (not shown), configured to: verify whether a signature of the second digital certificate is correct; and if the signature is not correct, determine that the second digital certificate is an invalid certificate.

Further, in one embodiment, the above-described device further comprises a second verification unit (not shown), configured to: obtain a validity period of the second digital certificate; and determine that the second digital certificate is an invalid certificate if current time is beyond the validity period.

According to an implementation manner, the obtaining unit 61 is configured to: obtain second certificate content of the second digital certificate; and hash the second certificate content to obtain a second certificate hash as the second certificate identification.

According to another implementation manner, the obtaining unit 61 is configured to: obtain a unique certificate number of the second digital certificate as the second certificate identification.

Through the above-described device 600, the validity of the digital certificate may be quickly verified, and the efficiency is enhanced.

According to another embodiment, a computer-readable storage medium having a computer program stored thereon is further provided, wherein when the computer program is executed in a computer, the computer is caused to execute the method described in conjunction with FIGs. 3 and 4.

According to still another embodiment, a computing device is further provided, comprising a memory and a processor, wherein executable codes are stored in the memory; and when the processor executes the executable codes, the method described in conjunction with FIGs. 3 and 4 is implemented.

Those skilled in the art should be aware that in one or more of the above-described examples, the functions described in the present invention may be achieved by hardware, software, firmware, or any combination thereof. When achieved by software, these functions can be stored in a computer-readable medium or transmitted as one or more instructions or codes on the computer-readable medium.

The purposes, technical solutions and beneficial effects of the present invention are further elaborated through the above-described embodiments. It should be understood that only some embodiments of the present invention are described above, and are not intended to limit the scope of the present invention. Any modification, equivalent substitution, improvement and the like made based on the technical solutions of the present invention shall fall within the protection scope of the present invention.

The specification also includes the following embodiments:
Embodiment 1. A method for invalidating a digital certificate, comprising:
   determining whether a first digital certificate is a to-be-invalidated digital certificate;
   in response to the first digital certificate being the to-be-invalidated digital certificate, obtaining a first certificate identification of the first digital certificate; and
   sending a recording request to a first node in a blockchain network, wherein the recording request comprises the first certificate identification to cause the first node to record the first certificate identification in a blockchain.
Embodiment 2. The method of embodiment 1, wherein the determining whether a first digital certificate is a to-be-invalidated digital certificate comprises:
   determining whether the first digital certificate is a digital certificate that is to be terminated.
Embodiment 3. The method of embodiment 2, wherein the determining whether a first digital certificate is a to-be-invalidated digital certificate further comprises:
   in response to the first digital certificate being a digital certificate that is to be terminated, obtaining a validity period of the first digital certificate;
   determining whether current time is within the validity period; and
   in response to the current time being within the validity period, determining that the first digital certificate is a to-be-invalidated digital certificate.
Embodiment 4. The method of embodiment 1, wherein the obtaining a first certificate identification of the first digital certificate comprises:
   obtaining first certificate content of the first digital certificate; and
   hashing the first certificate content to obtain a first certificate hash as the first certificate identification.
Embodiment 5. The method of embodiment 1, wherein the obtaining a first certificate identification of the first digital certificate comprises: obtaining a unique certificate number of the first digital certificate as the first certificate identification.
Embodiment 6. A method for verifying validity of a digital certificate, comprising:
   obtaining a second certificate identification of a to-be-verified second digital certificate;
   sending a search request to a second node in a blockchain network, wherein the search request comprises the second certificate identification to cause the second node to search to determine whether the second certificate identification is recorded in the blockchain;
   receiving a search result returned by the second node; and
   in response to the search result showing the second certificate being recorded in the blockchain, determining that the second digital certificate is an invalid certificate.
Embodiment 7. The method of embodiment 6, wherein before the sending a search request to a second node in a blockchain, the method further comprises:
   verifying whether a signature of the second digital certificate is correct; and
   in response to the signature being not correct, determining that the second digital certificate is an invalid certificate.
Embodiment 8. The method of embodiment 6 or 7, wherein before the sending a search request to a second node in a blockchain, the method further comprises:
   obtaining a validity period of the second digital certificate; and
   in response to current time being beyond the validity period, determining that the second digital certificate is an invalid certificate.
Embodiment 9. The method of embodiment 6, wherein the obtaining a second certificate identification of a to-be-verified second digital certificate comprises:
   obtaining second certificate content of the second digital certificate; and
   hashing the second certificate content to obtain a second certificate hash as the second certificate identification.
Embodiment 10. The method of embodiment 6, wherein the obtaining a second certificate identification of the second digital certificate comprises: obtaining a unique certificate number of the second digital certificate as the second certificate identification.
Embodiment 11. A device for invalidating a digital certificate, comprising:
   a determining unit, configured to determine whether a first digital certificate is a to-be-invalidated digital certificate;
   an obtaining unit, configured to, in response to the first digital certificate being the to-be-invalidated digital certificate, obtain a first certificate identification of the first digital certificate; and
   a request unit, configured to send a recording request to a first node in a blockchain network, wherein the recording request comprises the first certificate identification to cause the first node to record the first certificate identification in a blockchain.
Embodiment 12. The device of embodiment 11, wherein the determining unit is configured to:
   determine whether the first digital certificate is a digital certificate that is to be terminated.
Embodiment 13. The device of embodiment 12, wherein the determining unit is configured to:
   in response to the first digital certificate being the digital certificate that is to be terminated, obtain a validity period of the first digital certificate;
   determine whether current time is within the validity period; and
   in response to the current time being within the validity period, determine that the first digital certificate is a to-be-invalidated digital certificate.
Embodiment 14. The device of embodiment 11, wherein the obtaining unit is configured to:
   obtain first certificate content of the first digital certificate; and
   hash the first certificate content to obtain a first certificate hash as the first certificate identification.
Embodiment 15. The device of embodiment 11, wherein the obtaining unit is configured to: obtain a unique certificate number of the first digital certificate as the first certificate identification.
Embodiment 16. A device for verifying validity of a digital certificate, comprising:
   an obtaining unit, configured to obtain a second certificate identification of a to-be-verified second digital certificate;
   a searching unit, configured to send a search request to a second node in a blockchain network, wherein the search request comprises the second certificate identification to cause the second node to search whether the second certificate identification is recorded in a blockchain;
   a receiving unit, configured to receive a search result returned by the second node; and
   a confirming unit, configured to, in response to the search result showing the second certificate identification being recorded in the blockchain, determine that the second digital certificate is an invalid certificate.
Embodiment 17. The device of embodiment 16, further comprising a first verification unit, configured to:
   verify whether a signature of the second digital certificate is correct; and
   in response to the signature being not correct, determine that the second digital certificate is an invalid certificate.
Embodiment 18. The device of embodiment 16 or 17, further comprising a second verification unit, configured to:
   obtain a validity period of the second digital certificate; and
   determine that the second digital certificate is an invalid certificate if current time is beyond the validity period.
Embodiment 19. The device of embodiment 16, wherein the obtaining unit is configured to:
   obtain second certificate content of the second digital certificate; and
   hash the second certificate content to obtain a second certificate hash as the second certificate identification.
Embodiment 20. The method of embodiment 16, wherein the obtaining unit is configured to: obtain a unique certificate number of the second digital certificate as the second certificate identification.
Embodiment 21. A computer-readable storage medium having a computer program stored thereon, wherein when the computer program is executed in a computer, the computer is caused to execute the method according to any one of embodiments 1-10.
Embodiment 22. A computing device, comprising a memory and a processor, wherein executable codes are stored in the memory; and when the processor executes the executable codes, the method according to any one of embodiments 1-10 is implemented.

## Claims

1. A method for invalidating a digital certificate, comprising:
determining (311) whether a digital certificate is to be terminated, wherein the digital certificate is assigned with a certificate identification and a validity period;
in response to the digital certificate being a digital certificate that is to be terminated, obtaining the validity period of the digital certificate;
determining (312) whether a current time is within the validity period;
in response to the current time being within the validity period, determining that the digital certificate is a to-be-invalidated digital certificate;
in response to the digital certificate being the to-be-invalidated digital certificate, obtaining (32) the certificate identification of the digital certificate; and
sending (33) a recording request to a node in a blockchain network, wherein the recording request comprises the certificate identification to cause the node to record only the certificate identification in a blockchain.

2. The method of claim 1, wherein the obtaining a certificate identification of the digital certificate comprises:
obtaining certificate content of the digital certificate; and
hashing the certificate content to obtain a certificate hash as the certificate identification.

3. The method of claim 1, wherein the obtaining a certificate identification of the digital certificate comprises: obtaining a unique certificate number of the digital certificate as the certificate identification.

4. A computer-readable storage medium having a computer program stored thereon, wherein when the computer program is executed in a computer, the computer is configured to execute the method according to any one of the preceding claims.

5. A computing device, comprising a memory and a processor, wherein the computing device is configured to execute the method according to any one of claims 1-3.

## Patentansprüche

1. Verfahren zum Ungültigmachen eines digitalen Zertifikats, umfassend:
Bestimmen (311), ob ein digitales Zertifikat beendet werden soll, wobei dem digitalen Zertifikat eine Zertifikatidentifikation und eine Gültigkeitsdauer zugeordnet sind;
als Reaktion darauf, dass das digitale Zertifikat ein digitales Zertifikat ist, das beendet werden soll, Erhalten der Gültigkeitsdauer des digitalen Zertifikats;
Bestimmen (312), ob eine aktuelle Zeit innerhalb der Gültigkeitsdauer liegt;
als Reaktion darauf, dass die aktuelle Zeit innerhalb der Gültigkeitsdauer liegt, Bestimmen, dass das digitale Zertifikat ein ungültig zu machendes digitales Zertifikat ist;
als Reaktion darauf, dass das digitale Zertifikat das ungültig zu machende digitale Zertifikat ist, Erhalten (32) der Zertifikatidentifikation des digitalen Zertifikats; und
Senden (33) einer Aufzeichnungsanforderung an einen Knoten in einem Blockchain-Netzwerk, wobei die Aufzeichnungsanforderung die Zertifikatidentifikation umfasst, um den Knoten zu veranlassen, nur die Zertifikatidentifikation in einer Blockchain aufzuzeichnen.

2. Verfahren nach Anspruch 1, wobei das Erhalten einer Zertifikatidentifikation des digitalen Zertifikats umfasst:
Erhalten von Zertifikatinhalt des digitalen Zertifikats; und
Hashen des Zertifikatinhalts, um einen Zertifikat-Hash als die Zertifikatidentifikation zu erhalten.

3. Verfahren nach Anspruch 1, wobei das Erhalten einer Zertifikatidentifikation des digitalen Zertifikats umfasst: Erhalten einer eindeutigen Zertifikatnummer des digitalen Zertifikats als die Zertifikatidentifikation.

4. Computerlesbares Speichermedium mit einem darauf gespeicherten Computerprogramm, wobei, wenn das Computerprogramm in einem Computer ausgeführt wird, der Computer dazu eingerichtet ist, das Verfahren nach einem der vorhergehenden Ansprüche auszuführen.

5. Rechenvorrichtung, umfassend einen Speicher und einen Prozessor, wobei die Rechenvorrichtung dazu eingerichtet ist, das Verfahren nach einem der Ansprüche 1-3 auszuführen.

## Revendications

1. Procédé d'invalidation d'un certificat numérique, comprenant :
la détermination (311) si un certificat numérique doit être résilié, dans lequel une identification de certificat et une période de validité sont attribuées au certificat numérique ;
en réponse au fait que le certificat numérique est un certificat numérique qui doit être résilié, l'obtention de la période de validité du certificat numérique ;
la détermination (312) si un temps actuel est dans la période de validité ;
en réponse au fait que le temps actuel est dans la période de validité, la détermination que le certificat numérique est un certificat numérique à invalider ;
en réponse au fait que le certificat numérique est le certificat numérique à invalider, l'obtention (32) de l'identification de certificat du certificat numérique ; et
l'envoi (33) d'une demande d'enregistrement à un noeud dans un réseau de chaîne de blocs, dans lequel la demande d'enregistrement comprend l'identification de certificat pour amener le noeud à enregistrer uniquement l'identification de certificat dans une chaîne de blocs.

2. Procédé selon la revendication 1, dans lequel l'obtention d'une identification de certificat du certificat numérique comprend :
l'obtention d'un contenu de certificat du certificat numérique ; et
le hachage du contenu de certificat pour obtenir un hachage de certificat en tant qu'identification de certificat.

3. Procédé selon la revendication 1, dans lequel l'obtention d'une identification de certificat du certificat numérique comprend : l'obtention d'un numéro de certificat unique du certificat numérique en tant qu'identification de certificat.

4. Support de stockage lisible par ordinateur sur lequel est stocké un programme informatique, dans lequel, lorsque le programme informatique est exécuté dans un ordinateur, l'ordinateur est configuré pour exécuter le procédé selon l'une quelconque des revendications précédentes.

5. Dispositif informatique, comprenant une mémoire et un processeur, dans lequel le dispositif informatique est configuré pour exécuter le procédé selon l'une quelconque des revendications 1 à 3.
